# EUROPEAN PATENT SPECIFICATION

(11) **EP 3 056 300 B1**
(45) Date of publication and mention of the grant of the patent: **05.04.2017**
(21) Application number: 15154964.9
(22) Date of filing: 13.02.2015
(51) Int. Cl.: B22F 1/00, B22F 9/04, B01J 19/12

(54) **Nanoparticle manufacturing system**
System zur Herstellung von Nanopartikeln
Système de fabrication de nanoparticules

(43) Date of publication of application: 17.08.2016
(73) Proprietor: Gold NanoTech, Inc., 114 Taipei (TW)
(72) Inventor: Tan, Shan-Wen, 114 Taipei City (TW)
(74) Representative: Becker Kurig Straus

(56) References cited:
- EP-A1- 2 626 195
- US-A1- 2011 192 714
- VINCENZO AMENDOLA ET AL: "Laser ablation synthesis in solution and size manipulation of noble metal nanoparticles", PHYSICAL CHEMISTRY CHEMICAL PHYSICS, vol. 11, no. 20, 1 January 2009 (2009-01-01), page 3805, XP055202255, ISSN: 1463-9076, DOI: 10.1039/b900654k

## Description

### BACKGROUND OF THE INVENTION

### 1. Field of the Invention

The present invention relates to the technology field of nanoparticle, and more particularly to a nanoparticle manufacturing system.

### 2. Description of the Prior Art

Nanoparticle is a micro solid grain constituted by dozens of atoms to hundreds of atoms and includes very special physical and chemical characteristics. Moreover, the nanoparticles generally have grain sizes ranged from 1 nm to 100 nm, and can be applied to chemical and electronic categories. In chemical category, the nanoparticles can be manufactured to a catalyst having extremely high catalytic efficiency. Besides, in electronic category, the nanoparticles can be processed to a plurality of nano metal wires for further forming a metal mesh structure; therefore, the formed metal mesh structure can be applied in a touch panel. In addition, some special metal such as aluminum (Al) and lead (Pb) can be processed to a superconductor by using nanotechnology. Base on above descriptions, it is able to know that nanotechnology and nanoparticles have been widely applied in many categories consisting of chemical, material, optoelectronics, biotechnology, and pharmaceuticals.

Because nanomaterial has broad applications, scientists have made great efforts to research and develop various equipment and method for fabricating nanoparticles and/or a nano-unit. In conventional, the nanoparticle fabrication are carried out by using laser ablation method, metal vapor synthesis method and chemical reduction method, wherein the laser ablation method is a most-frequently-used method for fabricating the nanoparticles and/or the nano-unit. For example, a journal paper titled with "laser ablation synthesis in solution and size manipulation of noble metal nanoparticles" has been proposed by Vincenzo et al., and this journal paper has been published on the 1st of April 2009 by Physical Chemistry Chemical Physics. Moreover, Based on the laser ablation technology taught by the mentioned journal paper, a U.S. patent with publication No. 2011/0192714 is then proposed.

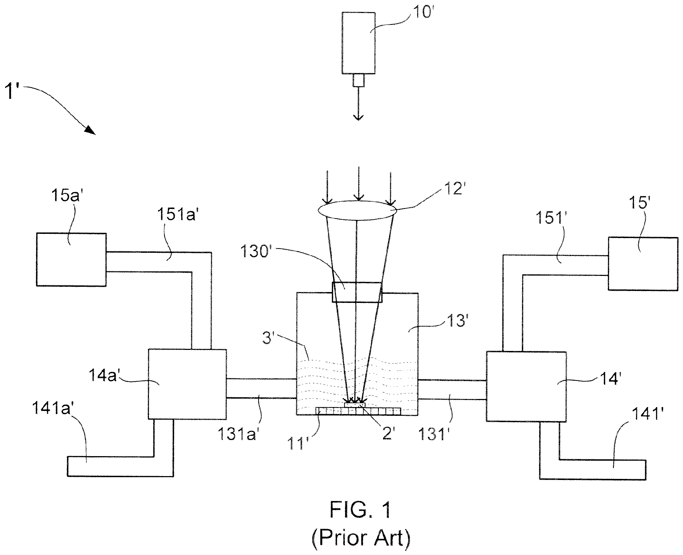

Furthermore, based on the mentioned journal paper and the laser ablation technology taught by the mentioned U.S. patent, a European patent with application No. 13000635.6 is therefore provided. With reference to FIG. 1, there is shown a framework view of a conventional laser ablation equipment provided by the European patent with application No. 13000635.6. The conventional laser ablation equipment shown by FIG. 1 is corresponding to figure 1 of the European patent having application No. 13000635.6. As shown in FIG. 1, the conventional laser ablation equipment 1' consists of: a laser source 10', a substrate 11', a condenser lens 12', an ablation chamber 13', a first mixing chamber 14', a first pump 15', a second mixing chamber 14a', and a second pump 15a'; wherein the substrate 11' is disposed on the bottom of the ablation chamber 13', and a target 2' such as a metal block is put on the substrate 11'.

In the conventional laser ablation equipment 1', a laser beam emitted by the laser source 10' is concentrated by the condenser lens 12', and then the concentrated laser beam would pass a transparent window 130' disposed on the top of the ablation chamber 13', so as to further shoot onto the surface of the target 2' put on the bottom of the ablation chamber 13'. Therefore, metal ablation would occur on the target 2' because the target 2' is irradiated by the laser beam having a controlled power of 90 mJ/pulse, such that a high-density metal atom cluster is produced on the target 2'. Furthermore, through the action provided by a surfactant solution 3' (for example, sodium dodecyl sulfate (SDS)), a plurality of metal nanoparticles are formed in the ablation chamber 13'.

From FIG. 1, it is able to know that the formed metal nanoparticles are next transferred to the first mixing chamber 14' and the second mixing chamber 14a' through a first collecting tube 131' and a second collecting tube 131a', respectively. Moreover, in the conventional laser ablation equipment 1', the first pump 15' is used for inputting a first polymer solution to the first mixing chamber 14' via the first solution inputting tube 151', and the second pump 15a' is adopted to input a second polymer solution to the second mixing chamber 14a' through the second solution inputting tube 151a'. Therefore, the metal nanoparticles and the first polymer solution can be mixed to a first nano-polymer solution, and the metal nanoparticles and the second polymer solution can be mixed to a second nano-polymer solution. Eventually, the first nano-polymer solution and the second nano-polymer solution would be transferred to a first product processing stage and a second product processing stage by using a first outputting tube 141' and a second outputting tube 141a', respectively; such that the first nano-polymer solution and the second nano-polymer solution can be further processed to a first composite nano unit and a second composite nano unit in the first product processing stage and the second product processing stage.

Although the laser ablation equipment 1' are conventionally used to fabricate a variety of composite nano products, the conventional laser ablation equipment 1' has revealed some drawbacks and shortcomings in practical execution; wherein the drawbacks and shortcomings showed by the conventional laser ablation equipment 1' are as follows:
(1) when using the laser ablation equipment 1' to carry out nano unit fabrication, the power of the laser beam must be precisely controlled at 90 mJ/pulse for facilitating the metal ablation occur on the target 2'. So that, the engineers skilled in laser ablation technologies are able to easily know that the laser source 10' applied in the laser ablation equipment 1' should be a high-cost laser generating device resulted from the requirements of high power and high precision.
(2) moreover, when the laser ablation equipment 1' is operated, a laser beam emitted by the laser source 10' is concentrated by the condenser lens 12', and then the concentrated laser beam would further shoot onto the surface of the target 2' disposed on the bottom of the ablation chamber 13' for making the metal ablation occur on the target 2'. However, resulted from the surface of target 2' (i.e., metal block) is bumpy, the grain sizes of the metal nanoparticles produced through the metal ablation may be uneven.
(3) inheriting to above point (1), because the ablation chamber 13' is filled with the surfactant solution 3', the laser beam shooting into the ablation chamber 13' may be influenced by reflection and/or refraction effects occurring from the surfactant solution 3'. As a result, the use cost of the laser ablation equipment 1' would be increased due to the low incidence rate of the laser beam.
(4) inheriting to above point (2), because the ablation chamber 13' is filled with the surfactant solution 3', the laser beam shooting into the ablation chamber 13' may be influenced by reflection and/or refraction effects occurring from the surfactant solution 3'. As a result, the use cost of the laser ablation equipment 1' would be increased due to the low incidence rate of the laser beam.

Accordingly, in view of the conventional laser ablation equipment 1' still include drawbacks, the inventor of the present application has made great efforts to make inventive research thereon and eventually provided a nanoparticle manufacturing system.

### SUMMARY OF THE INVENTION

The primary objective of the present invention is to provide a nanoparticle manufacturing system differing from conventional nanoparticle fabricating equipment. In this nanoparticle manufacturing system, a laser beam emitted from a laser source is directly guided to the surface of a target disposed in an ablation chamber through a light guide tube, such that the laser beam is prevented from being influenced by reflection and/or refraction effects occurring from the cooling liquid filled in the ablation chamber. Moreover, in this nanoparticle manufacturing system, a light guidance-out end of the light guide tube is controlled to be apart from the target surface by a specific distance (<5mm). Thus, the laser beam is able to effectively process the target to a plurality of nanoparticles by way of laser ablation, in spite of the laser beam provided by the laser source is a low-power laser beam (<30 mJ/pulse).

Accordingly, in order to achieve the primary objective of the present invention, the inventor of the present invention provides a nanoparticle manufacturing system, according to claim 1.

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:
FIG. 1 is a framework view of a conventional laser ablation equipment provided by a European patent having application No. 13000635.6;
FIG. 2 is a schematic framework diagram of a nanoparticle manufacturing system according to the present invention;
FIG. 3 shows a connection framework of an ablation chamber, a light guide tube and a low-pressure homogenizer;
FIG. 4 is a first framework diagram of a nano unit manufacturing system according to the present invention; and
FIG. 5 is a second framework diagram of a nano unit manufacturing system.

### DETAILED DESCRIPTION OF THE PREFERRED EMBODIMENTS

To more clearly describe a nanoparticle manufacturing system according to the present invention, embodiments of the present invention will be described in detail with reference to the attached drawings hereinafter.

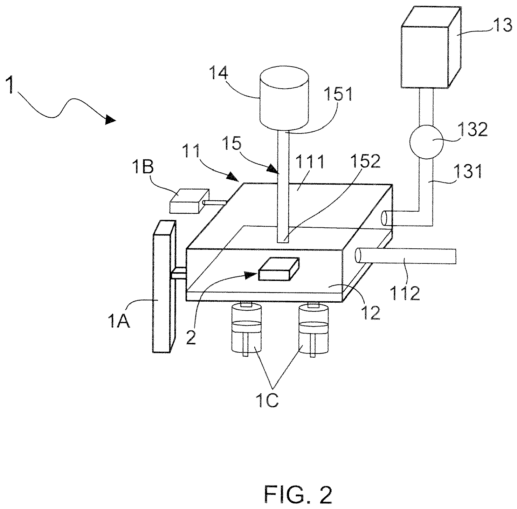

Please simultaneously refer to FIG. 2, there is shown a schematic framework diagram of a nanoparticle manufacturing system according to the present invention. As shown in FIG. 2, the nanoparticle manufacturing system 1 consists of: an ablation chamber 11, a substrate 12, a cooling liquid inputting device 13, a laser source 14, at least one light guide tube 15, a target transferring device 1A, a liquid surface controlling device 1B, a low-pressure homogenizer 1C, and a constant temperature device (not shown). In which, the ablation chamber 11 is made of polytetrafluoroethene (PTFE) and has a transparent window 111 on the top thereof.

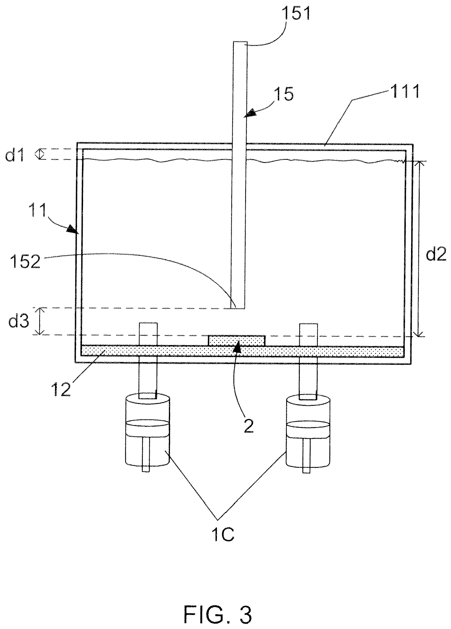

Continuously referring to FIG. 2, and please simultaneously refer to FIG. 3, where a connection framework of the ablation chamber 11, the light guide tube 15 and the low-pressure homogenizer 1C is shown. As shown in FIGs., the substrate 12 is disposed in the ablation chamber 11 for a target 2 being put thereon. When applying the nanoparticle manufacturing system 1, engineers can operate the target transferring device 1 A connected to the ablation chamber 11 for transferring the target 2 into the ablation chamber 11. In the present invention, the target 2 is an inert metal target and the material of the substrate 11 is the same to the target 2. Besides, the cooling liquid inputting device 13 is connected to the ablation chamber 1I via a cooling liquid transmitting tube 131. Particularly, the cooling liquid transmitted from the cooling liquid inputting device 13 into the ablation chamber 11 is an organic-phase cooling liquid or a water-phase cooling liquid. Moreover, the liquid surface height of the cooling liquid is controlled to be apart from the disposing height of the transparent window 111 and the surface of the target 2 by a first distance d1 (< 5mm) and a second distance d2 (< 5cm), respectively. In which, the said liquid surface height is controlled and adjusted by using the liquid surface controlling device 1B to fill the cooling liquid into the ablation chamber 11 and/or pumping the cooling liquid out of the ablation chamber 11.

As shown in FIG. 2 and FIG. 3, a laser beam provided by the laser source 14 is guided to the surface of the target 2 through the at least one light guide tube 15. In the present invention, the light guide tube 15 is an optic fiber or a quartz glass column having a light guidance-in end 151 connected to the laser source 14 and a light guidance-out end 152. Moreover, the light guidance-out end 152 is extended into the ablation chamber 11 for being apart from the surface of the target 2 with a third distance d3 (< 5mm). Thus, the laser beam provided by the laser source 14 can be guided to the surface of the target 2 effectively and directly, so as to process the target 2 to a plurality of nanoparticles by way of laser ablation. Herein, it needs to stress that, because the material of the substrate 12 is the same to the target 2, the laser beam shooting out the target 2 would further shoot onto the substrate 12. That is, the inner bottom of the ablation chamber 11 is protected by the substrate 12 from being shot by the laser beam shooting out the target 2, such that some extra pollutant resulted from the laser beam shooting onto the inner bottom of the ablation chamber 11 can be prevented from being produced.

In addition, a low-pressure homogenizer 1C and a constant temperature device are also added in this nanoparticle manufacturing system 1, wherein the low-pressure homogenizer 1C is connected to the ablation chamber and used for facilitating the cooling liquid flow circularly in the ablation chamber 11, so as to accelerate the formation of the nanoparticles. Moreover, constant temperature system is connected to the ablation chamber 11 for maintain the temperature of the cooling liquid.

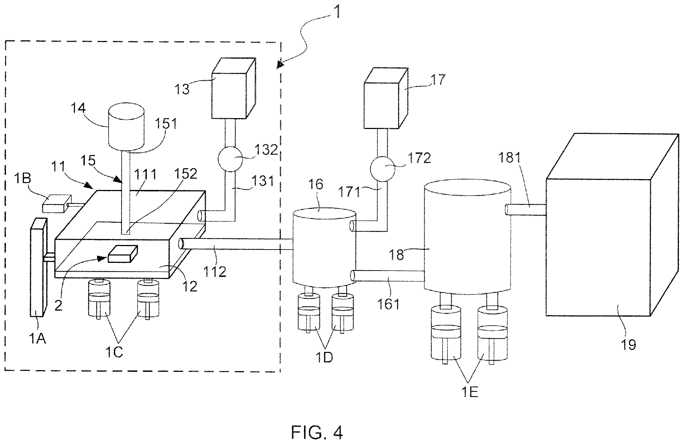

From above descriptions, it is able to understand that the said nanoparticle manufacturing system 1 is a laser ablation equipment. In the present invention, this nanoparticle manufacturing system 1 is further developed to a nano unit manufacturing system. Please refer to FIG. 4, where a first framework diagram for the nano unit manufacturing system is shown. As shown in FIG. 4, the nano unit manufacturing system consists of: the aforesaid nanoparticle system 1, a primary mixing device 16, a polymer material inputting device 17, a secondary mixing device 18, a nano unit producing device 19, a first high-pressure homogenizer ID, and a second high-pressure homogenizer 1E.

Inheriting to above descriptions, the primary mixing device 16 is connected to the ablation chamber 11 through a nanoparticle transmitting tube 112, and the polymer material inputting device 17 is connected to the primary mixing device 16 via a polymer material transmitting tube 171. By such disposing, the nanoparticles and a polymer solution are transmitted to the primary mixing device 16 via the nanoparticle transmitting tube 112 and the polymer material transmitting tube 171, respectively; therefore, the primary mixing device 16 is able to mix the nanoparticles and polymer solution to a primary mix solution. Herein the said polymer solution is an organic-phase polymer solution or a water-phase polymer solution.

The secondary mixing device 18 is connected to the primary mixing device 16 via a first mix solution transmitting tube 161, and the nano unit producing device 19 is connected to the secondary mixing device 18 through a second mix solution transmitting tube 181. Therefore, the primary mix solution can be transmitted from the primary mixing device 16 into the secondary mixing device 18, and then the primary mix solution is further process to a second mix solution by the secondary mixing device 18. Eventually, because the nano unit producing device 19 is connected to the secondary mixing device 18 through a second mix solution transmitting tube 181, the second mix solution can be further transmitted to the nano unit producing device 19, so as to be processed to a composite nano unit. Herein, it is noted that the ablation chamber 11, the primary mixing device 16, the secondary mixing device 18, and the nano unit producing device 19 are provided with a vacuum internal environment.

In addition, for the cooling liquid transmitting tube 131 and the polymer material transmitting tube 171 are respectively disposed with a first flow rate controlling valve 132 and a second flow rate controlling valve 172 thereon. Moreover, the first high-pressure homogenizer 1D connected to the primary mixing device is used for accelerating the mix of the nanoparticles and the polymer solution, and the second high-pressure homogenizer 1E connected to the secondary mixing device is adopted for accelerating the process of the second mix solution.

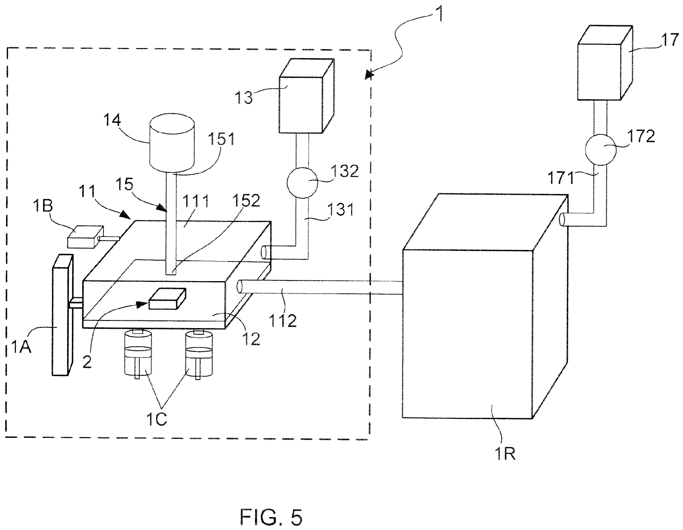

Although FIG. 4 depicts that the nano unit manufacturing system can be constituted by a nanoparticle manufacturing system 1, a primary mixing device 16, a polymer material inputting device 17, a secondary mixing device 18, a nano unit producing device 19, a first high-pressure homogenizer 1D, and a second high-pressure homogenizer IE, that cannot used for limiting the possible embodiment of the nano unit manufacturing system. Please refer to FIG. 5, there is shown a second framework diagram for the nano unit manufacturing system. As shown in FIG. 5, the nano unit manufacturing system can also be constituted by the aforesaid nanoparticle manufacturing system 1, a powder manufacturing device 1R and the aforesaid polymer material inputting device 17. In which, the powder manufacturing device 1R is connected to the ablation chamber 11 through the nanoparticle transmitting tube 112. Thus, the polymer solution outputted by the polymer material inputting device 17 and the nanoparticles outputted by the ablation chamber 11 can be transmitted to the powder manufacturing device 1R, so as to be further processed to a powdered nano unit.

Therefore, through above descriptions, the nanoparticle manufacturing system 1 proposed by the present invention has been introduced completely and clearly; in summary, the present invention includes the advantages of:
(1) Differing from conventional nanoparticle fabricating equipment, the nanoparticle manufacturing system 1 provided by the present invention mainly uses a light guide tube 15 for guiding the laser beam emitted by the laser source 14 onto the surface of the target 2 disposed in the ablation chamber 11, such that the laser beam is prevented from being influenced by reflection and/or refraction effects occurring from the cooling liquid filled in the ablation chamber 11.
(2) Moreover, in this nanoparticle manufacturing system 1, a light guidance-out end 152 of the light guide tube 15 is controlled to be apart from the target surface by a specific distance (<5mm). Thus, the laser beam is able to effectively process the target 2 to a plurality of nanoparticles by way of laser ablation, in spite of the laser beam provided by the laser source 14 is a low-power laser beam (< 30 mJ/pulse).
(3) Furthermore, because the said specific distance is especially controlled to 5mm, the grain sizes of the nanoparticles produced through the laser ablation are uniform even if the surface of target 2' is bumpy.

## Claims

1. A nanoparticle manufacturing system, comprising:
an ablation chamber, having a transparent window on the top thereof;
a substrate, being disposed in the ablation chamber for a target being put thereon;
a cooling liquid inputting device, being connected to the ablation chamber via a cooling liquid transmitting tube, and used for inputting a cooling liquid to the ablation chamber; wherein a liquid surface height of the cooling liquid is controlled to be apart from a disposing height of the transparent window by a first distance, moreover, the liquid surface height being apart from the surface of the target with a second distance;
a laser source for providing a laser beam;
at least one light guide tube, having a light guidance-in end connected to the laser source and a light guidance-out end, wherein the light guidance-out end is extended into the ablation chamber for being apart from the surface of the target with a third distance; wherein the guidance-out end is lower than the liquid surface height of the cooling liquid; and
a liquid surface controlling device, being connected to the ablation chamber and used for detecting the liquid surface height; therefore, by way of filling the cooling liquid into the ablation chamber and pumping the cooling liquid out of the ablation chamber, the liquid surface controlling device being able to control the liquid surface height to be apart from the disposing height of the transparent window with the first distance;
wherein the laser beam emitted by the laser source is guided into the ablation chamber through the at least one light guide tube, so as to process the target to a plurality of nanoparticles.

2. The nanoparticle manufacturing system of claim 1, wherein the cooling liquid is selected from the group consisting of: organic-phase cooling liquid and water-phase cooling liquid.

3. The nanoparticle manufacturing system of claim 1, wherein the ablation chamber is made of polytetrafluoroethene (PTFE).

4. The nanoparticle manufacturing system of claim 1, wherein the target is an inert metal target.

5. The nanoparticle manufacturing system of claim 1, wherein the light guide tube is selected from the group consisting of: optic fiber and quartz glass column.

6. The nanoparticle manufacturing system of claim 1, wherein the first distance is smaller than 5 mm, the second distance is smaller than 5 cm, and the third distance is smaller than 5 mm.

7. The nanoparticle manufacturing system of claim 1, further comprising:
a target transferring device, being connected to the ablation chamber for transferring the target into the ablation chamber;
a low-pressure homogenizer, being connected to the ablation chamber, and used for facilitating the cooling liquid flow circularly in the ablation chamber, so as to accelerate the formation of the nanoparticles; and
a constant temperature system, being connected to the ablation chamber for maintain the temperature of the cooling liquid.

8. The nanoparticle manufacturing system of claim 4, wherein the material of the substrate is the same to the target.

9. The nanoparticle manufacturing system of claim 7, further comprising a powder manufacturing device, being connected to the ablation chamber through a nanoparticle transmitting tube.

10. The nanoparticle manufacturing system of claim 7, further comprising:
a primary mixing device, being connected to the ablation chamber via a nanoparticle transmitting tube;
a polymer material inputting device, being connected to the primary mixing device through a polymer material transmitting tube; wherein the nanoparticles and a polymer solution are transmitted to the primary mixing device via the nanoparticle transmitting tube and the polymer material transmitting tube, respectively; therefore, the primary mixing device mixing the nanoparticles and polymer solution to a primary mix solution;
a secondary mixing device, being connected to the primary mixing device via a first mix solution transmitting tube; wherein the primary mix solution is transmitted from the primary mixing device into the secondary mixing device, and then the primary mix solution is further process to a second mix solution by the secondary mixing device; and
a nano unit producing device, being connected to the secondary mixing device through a second mix solution transmitting tube; wherein the second mix solution is further transmitted from the secondary mixing device into the nano unit producing device, so as to be processed to a composite nano unit.

11. The nanoparticle manufacturing system of claim 9, further comprising a polymer material inputting device, being connected to the powder manufacturing device via a polymer material transmitting tube; wherein a polymer solution outputted by the polymer material inputting device and the nanoparticles outputted by the ablation chamber can be transmitted to the powder manufacturing device, so as to be further processed to a powdered nano unit.

12. The nanoparticle manufacturing system of claim 10, wherein the polymer solution is selected from the group consisting of: organic-phase polymer solution and water-phase polymer solution.

13. The nanoparticle manufacturing system of claim 10, further comprising:
a first high-pressure homogenizer, being connected to the primary mixing device, used for accelerating the mix of the nanoparticles and the polymer solution; and
a second high-pressure homogenizer, being connected to the secondary mixing device, used for accelerating the process of the second mxi solution.

14. The nanoparticle manufacturing system of claim 10, wherein the ablation chamber, the primary mixing device, the secondary mixing device, and the nano unit producing device are provided with a vacuum internal environment.

15. The nanoparticle manufacturing system of claim 10, wherein the cooling liquid transmitting tube and the polymer material transmitting tube are respectively disposed with a first flow rate controlling valve and a second flow rate controlling valve thereon.

## Patentansprüche

1. Nanopartikelherstellungssystem, umfassend:
eine Abtragungskammer, die ein transparentes Fenster auf ihrer Oberseite aufweist;
ein Substrat, das in der Abtragungskammer angeordnet ist für ein darauf gesetztes Ziel;
eine Kühlflüssigkeits-Zuführvorrichtung, die mit der Abtragungskammer über ein Kühlflüssigkeits-Weiterleitrohr verbunden ist, und zum Zuführen einer Kühlflüssigkeit zu der Abtragungskammer verwendet wird; wobei eine Flüssigkeitsoberflächenhöhe der Kühlflüssigkeit so gesteuert ist, dass sie von einer Anordnungshöhe des transparenten Fensters durch einen ersten Abstand getrennt ist, zudem ist die Flüssigkeitsoberflächenhöhe von der Oberfläche des Ziels mit einem zweiten Abstand getrennt;
eine Laserquelle zum Bereitstellen eines Laserstrahls;
mindestens ein Lichtleiterrohr, das ein mit der Laserquelle verbundenes Lichtzuleitende und ein Lichtableitende aufweist, wobei sich das Lichtableitende in die Abtragungskammer erstreckt, um von der Oberfläche des Ziels mit einem dritten Abstand getrennt zu sein; wobei das Lichtableitende niedriger ist als die Flüssigkeitsoberflächenhöhe der Kühlflüssigkeit; und
eine Flüssigkeitsoberflächen-Steuervorrichtung, die mit der Abtragungskammer verbunden ist und zum Erfassen der Flüssigkeitsoberflächenhöhe verwendet wird; daher ist mittels Füllens der Kühlflüssigkeit in die Abtragungskammer und Pumpens der Kühlflüssigkeit aus der Abtragungskammer die Flüssigkeitsoberflächen-Steuervorrichtung fähig die Flüssigkeitsoberflächenhöhe so zu steuern, dass sie von der Anordnungshöhe des transparenten Fensters mit dem ersten Abstand getrennt ist;
wobei der durch die Laserquelle emittierte Laserstrahl durch das mindestens eine Lichtleiterrohr in die Abtragungskammer geleitet wird, um so das Ziel zu einer Vielzahl von Nanopartikeln zu verarbeiten.

2. Nanopartikelherstellungssystem nach Anspruch 1, wobei die Kühlflüssigkeit ausgewählt ist aus der Gruppe bestehend aus: einer organischen-Phase-Kühlflüssigkeit und einer Wasserphase-Kühlflüssigkeit.

3. Nanopartikelherstellungssystem nach Anspruch 1, wobei die Abtragungskammer aus Polytetrafluorethen (PTFE) gefertigt ist.

4. Nanopartikelherstellungssystem nach Anspruch 1, wobei das Ziel ein inertes Metallziel ist.

5. Nanopartikelherstellungssystem nach Anspruch 1, wobei das Lichtleiterrohr ausgewählt ist aus der Gruppe bestehend aus: einer optischen Faser und einer Quarzglassäule.

6. Nanopartikelherstellungssystem nach Anspruch 1, wobei der erste Abstand kleiner als 5 mm ist, der zweite Abstand kleiner als 5 cm ist und der dritte Abstand kleiner als 5 mm ist.

7. Nanopartikelherstellungssystem nach Anspruch 1, weiterhin umfassend:
eine Zieltransportvorrichtung, die mit der Abtragungskammer verbunden ist, zum Transportieren des Ziels in die Abtragungskammer;
einen Niederdruckhomogenisator, der mit der Abtragungskammer verbunden ist, und verwendet wird, die Kühlflüssigkeit zu Unterstützen in der Abtragungskammer rundumlaufend zu strömen, um so die Bildung der Nanopartikel zu beschleunigen; und
ein System für konstante Temperatur, das mit der Abtragungskammer verbunden ist, um die Temperatur der Kühlflüssigkeit zu erhalten.

8. Nanopartikelherstellungssystem nach Anspruch 4, wobei das Material des Substrats dasselbe wie des Ziels ist.

9. Nanopartikelherstellungssystem nach Anspruch 7, weiterhin umfassend eine Pulverherstellungsvorrichtung, die mit der Abtragungskammer durch ein Nanopartikel-Weiterleitrohr verbunden ist.

10. Nanopartikelherstellungssystem nach Anspruch 7, weiterhin umfassend:
eine primäre Mischvorrichtung, die mit der Abtragungskammer über ein Nanopartikel-Weiterleitrohr verbunden ist;
eine Polymermaterial-Zuführvorrichtung, die mit der primären Mischvorrichtung durch ein Polymermaterial-Weiterleitrohr verbunden ist; wobei die Nanopartikel und eine Polymerlösung über das Nanopartikel-Weiterleitrohr bzw. das Polymermaterial-Weiterleitrohr zu der primären Mischvorrichtung geleitet werden; daher mischt die primäre Mischvorrichtung die Nanopartikel und die Polymerlösung zu einer primären Mischlösung;
eine sekundäre Mischvorrichtung, die mit der primären Mischvorrichtung über ein erstes Mischlösungs-Weiterleitrohr verbunden ist; wobei die primäre Mischlösung von der primären Mischvorrichtung in die sekundäre Mischvorrichtung geleitet wird, und dann die primäre Mischlösung durch die sekundäre Mischvorrichtung zu einer zweiten Mischlösung weiterverarbeitet wird; und
eine nanoeinheitenproduzierende Vorrichtung, die mit der sekundären Mischvorrichtung durch ein zweites Mischlösungs-Weiterleitrohr verbunden ist; wobei die zweite Mischlösung von der sekundären Mischvorrichtung in die nanoeinheitenproduzierende Vorrichtung weitergeleitet wird; um so zu einer zusammengesetzten Nanoeinheit verarbeitet zu werden.

11. Nanopartikelherstellungssystem nach Anspruch 9, weiterhin umfassend eine Polymermaterial-Zuführvorrichtung, die mit der Pulverherstellungsvorrichtung über ein Polymermaterial-Weiterleitrohr verbunden ist; wobei eine Polymerlösung, die von der Polymermaterial-Zuführvorrichtung abgegeben wird, und die Nanopartikel, die von der Abtragungskammer abgegeben werden, zu der Pulverherstellungsvorrichtung geleitet werden können, um so zu einer pulvrigen Nanoeinheit weiterverarbeitet zu werden.

12. Nanopartikelherstellungssystem nach Anspruch 10, wobei die Polymerlösung ausgewählt ist aus der Gruppe bestehend aus: einer organischen-Phase-Polymerlösung und einer Wasserphase-Polymerlösung.

13. Nanopartikelherstellungssystem nach Anspruch 10, weiterhin umfassend:
einen ersten Hochdruckhomogenisator, der mit der primären Mischvorrichtung verbunden ist und zum Beschleunigen des Mischens der Nanopartikel und der Polymerlösung verwendet wird; und
einen zweiten Hochdruckhomogenisator, der mit der sekundären Mischvorrichtung verbunden ist und zum Beschleunigen des Verarbeitens der zweiten Mischlösung verwendet wird.

14. Nanopartikelherstellungssystem nach Anspruch 10, wobei die Abtragungskammer, die primäre Mischvorrichtung, die sekundäre Mischvorrichtung und die nanoeinheitenproduzierende Vorrichtung mit einer Vakuuminnenumgebung versehen sind

15. Nanopartikelherstellungssystem nach Anspruch 10, wobei das Kühlflüssigkeits-Weiterleitrohr und das Polymermaterial-Weiterleitrohr mit einem ersten Strömungsratensteuerventil bzw. einem zweiten Strömungsratensteuerventil daran angeordnet sind.

## Revendications

1. Système de fabrication de nanoparticules, comprenant :
une chambre d'ablation, ayant une fenêtre transparente en haut de celle-ci ;
un substrat, qui est disposé dans la chambre d'ablation pour une cible placée sur celui-ci ;
un dispositif d'introduction de liquide de refroidissement, qui est relié à la chambre d'ablation par le biais d'un tube de transmission de liquide de refroidissement, et utilisé pour l'introduction d'un liquide de refroidissement dans la chambre d'ablation ; dans lequel une hauteur de la surface liquide du liquide de refroidissement est régulée pour être séparée d'une hauteur d'évacuation de la fenêtre transparente par une première distance, de plus la hauteur de la surface liquide est séparée de la surface de la cible par une deuxième distance ;
une source laser pour fournir un faisceau laser ;
au moins un tube de guidage de lumière, ayant une extrémité de guidage de la lumière vers l'intérieur reliée à la source laser et une extrémité de guidage de la lumière vers l'extérieur, l'extrémité de guidage de la lumière vers l'extérieur se prolongeant dans la chambre d'ablation pour être séparée de la surface de la cible par une troisième distance ; l'extrémité de guidage de la lumière vers l'extérieur étant inférieure à la hauteur de la surface liquide du liquide de refroidissement ; et
un dispositif de régulation de la surface liquide, qui est relié à la chambre d'ablation et utilisé pour détecter la hauteur de la surface liquide : par conséquent, par chargement du liquide de refroidissement dans la chambre d'ablation et pompage du liquide de refroidissement à l'extérieur de la chambre d'ablation, le dispositif de régulation de la surface liquide étant capable de réguler la hauteur de la surface liquide pour être séparée de la hauteur d'introduction de la fenêtre transparente par la première distance ;
dans lequel le faisceau laser émis par la source laser est guidé dans la chambre d'ablation par l'au moins un tube de guidage de lumière, de sorte à transformer la cible en une pluralité de nanoparticules.

2. Système de fabrication de nanoparticules selon la revendication 1, dans lequel le liquide de refroidissement est sélectionné dans le groupe constitué par : un liquide de refroidissement de phase organique et un liquide de refroidissement de phase aqueuse.

3. Système de fabrication de nanoparticules selon la revendication 1, dans lequel la chambre d'ablation se compose de polytétrafluoroéthylène (PTFE).

4. Système de fabrication de nanoparticules selon la revendication 1, dans lequel la cible est une cible métallique inerte.

5. Système de fabrication de nanoparticules selon la revendication 1, dans lequel le tube de guidage de lumière est sélectionné dans le groupe constitué par :
une fibre optique et une colonne de verre de quartz.

6. Système de fabrication de nanoparticules selon la revendication 1, dans lequel la première distance est inférieure à 5 mm, la deuxième distance est inférieure à 5 cm et la troisième distance est inférieure à 5 mm.

7. Système de fabrication de nanoparticules selon la revendication 1, comprenant en outre :
un dispositif de transfert de cible qui est relié à la chambre d'ablation pour transférer la cible dans la chambre d'ablation ;
un homogénéisateur à basse pression qui est relié à la chambre d'ablation et est utilisé pour faciliter l'écoulement du liquide de refroidissement de manière circulaire dans la chambre d'ablation, de sorte à accélérer la formation des nanoparticules ; et
un système de température constante qui est relié à la chambre d'ablation pour maintenir la température du liquide de refroidissement.

8. Système de fabrication de nanoparticules selon la revendication 4, dans lequel le matériau du substrat est identique à la cible.

9. Système de fabrication de nanoparticules selon la revendication 7, comprenant en outre un dispositif de fabrication de poudre qui est relié à la chambre d'ablation par un tube de transmission de nanoparticules.

10. Système de fabrication de nanoparticules selon la revendication 7, comprenant en outre :
un dispositif de mélange principal qui est relié à la chambre d'ablation par le biais d'un tube de transmission de nanoparticules ;
un dispositif d'introduction d'un matériau polymère qui est relié au dispositif de mélange principal par le biais d'un tube de transmission de matériau polymère ; les nanoparticules et une solution de polymère étant transmises au dispositif de mélange principal respectivement par le biais du tube de transmission de nanoparticules et du tube de transmission de matériau polymère ; le dispositif de mélange principal mélangeant donc les nanoparticules et la solution de polymère à une solution de mélange principale ;
un dispositif de mélange secondaire qui est relié au dispositif de mélange principal par le biais d'un tube de transmission d'une première solution de mélange ; la solution de mélange principale étant transmise du dispositif de mélange principal vers le dispositif de mélange secondaire, et ensuite la solution de mélange primaire étant davantage traitée en une seconde solution de mélange par le dispositif de mélange secondaire ; et
un dispositif de production d'un nanomotif qui est relié au dispositif de mélange secondaire par le biais d'un tube de transmission de la seconde solution de mélange ; la seconde solution de mélange étant en outre transmise du dispositif de mélange secondaire vers le dispositif de production d'un nanomotif, de sorte à être transformée en un nanomotif composite.

11. Système de fabrication de nanoparticules selon la revendication 9, comprenant en outre un dispositif d'introduction de matériau polymère qui est relié au dispositif de fabrication de poudre par le biais d'un tube de transmission de matériau polymère ; une solution de polymère fournie par le tube d'introduction de matériau polymère et les nanoparticules fournies par la chambre d'ablation pouvant être transmises au dispositif de fabrication de poudre, de sorte à être davantage transformées en un nanomotif pulvérulent.

12. Système de fabrication de nanoparticules selon la revendication 10, dans lequel la solution de polymère est sélectionnée dans le groupe constitué par : une solution de polymère de phase organique et une solution de polymère de phase aqueuse.

13. Système de fabrication de nanoparticules selon la revendication 10, comprenant en outre :
un premier homogénéisateur à pression élevée qui est relié au dispositif de mélange principal, utilisé pour accélérer le mélange des nanoparticules et de la solution de polymère ; et
un second homogénéisateur à pression élevée qui est relié au dispositif de mélange secondaire, utilisé pour accélérer le mélange des nanoparticules et de la seconde solution de mélange.

14. Système de fabrication de nanoparticules selon la revendication 10, dans lequel la chambre d'ablation, le dispositif de mélange principal, le dispositif de mélange secondaire et le dispositif de produit d'un nanomotif sont pourvus d'un environnement interne sous vide.

15. Système de fabrication de nanoparticules selon la revendication 10, dans lequel le tube de transmission de liquide de refroidissement et le tube de transmission de matériau polymère sont respectivement pourvus d'une première soupape de régulation du débit et d'une seconde soupape de régulation du débit sur ceux-ci.
